Europäisches Patentamt

European Patent Office

Office européen des brevets

(19)

(11) Publication number: **0 273 584 B1**

## EUROPEAN PATENT SPECIFICATION

(12)

(45) Date of publication of patent specification: **18.03.92**  (51) Int. Cl.⁵: **B60R  22/38**

(21) Application number: **87310398.0**

(22) Date of filing: **25.11.87**

(54) **Vehicle seat belt retractor with latching inhibition.**

(30) Priority: **25.11.86 GB 8628148**

(43) Date of publication of application:
**06.07.88 Bulletin  88/27**

(45) Publication of the grant of the patent:
**18.03.92 Bulletin  92/12**

(84) Designated Contracting States:
**DE ES FR GB IT SE**

(56) References cited:
**GB-A- 2 113 979**
**US-A- 3 711 037**

(73) Proprietor: **ASE (UK) LIMITED**
**Norfolk Street**
**Carlisle Cumbria CA2 5HX(GB)**

(72) Inventor: **Burke, David**
**34 Roseberry Road**
**Stanwix Carlisle Cumbria(GB)**

(74) Representative: **Jones, Ian et al**
**W.P. THOMSON & CO. High Holborn House**
**52-54 High Holborn**
**London WC1V 6RY(GB)**

Rank Xerox (UK) Business Services

## Description

The invention relates to a retractor for use in a vehicle seat belt system, and in particular to the kind of retractor which incorporates a latch mechanism operable to latch the retractor against belt withdrawal therefrom in response to belt acceleration in excess of a predetermined amount.

Belt sensitive latching of such a retractor is required only in response to belt acceleration in the direction of belt withdrawal when the belt is in use. The belt sensitive latching mechanisms typically depend for operation on movement within the retractor of an inertia member, and the construction is such that latching can take place under conditions other than as required, when latching serves no useful purpose and may be a source of annoyance to the user, who may be obliged to take action to restore the retractor to free operation.

Belt-sensitive retractors have accordingly been designed to incorporate an inhibitor mechanism arranged to inhibit latch mechanism operation in a predetermined retractor condition, and the invention is concerned with the provision of a retractor incorporating an inhibitor mechanism which is effective and of particular simplicity.

A belt-sensitive retractor may comprise a rotatable spool from which the belt can be protracted for use, and onto which the belt can be retracted by a rewind spring, a latch mechanism for latching the spool against rotation in the belt protraction direction, the latch mechanism comprising an inertia mass rotatable with the spool during spool rotation corresponding to belt acceleration below a predetermined amount and arranged to lag relative to the spool on spool rotation corresponding to belt acceleration above the predetermined amount, a pawl pivotably mounted on the spool and engageable by the inertia mass when this lags on the spool so that the inertia mass causes pivoting of the pawl to effect latching.

US-A-3 711 037 (ASE Corporation) discloses two belt sensitive retractor mechanisms. The first latches by pivoting a pawl under its own inertia and includes inhibiting or blocking means comprising a gear driven disc having a limit shoulder and cooperating with a pin carried by the pawl to prevent pawl latching movement until protraction of the belt beyond an initial extended position. The second mechanism has a pawl eccentrically mounted on pawl means so as to effect latching by engagement with teeth of the sleeve to effect movement of a lock bar. Blocking means are included which comprise a disc carried on a pawl mounting plate, with an arcuate limit shoulder which can stop latching movement of the pawl, the plate being rotatable incrementally by a tooth of the sleeve.

The present invention seeks to provide a retractor in which an inhibitor mechanism is operated by and/or operates on elements of the latch mechanism substantially without or with only minor modification thereof.

According to the present invention there is provided a vehicle seat belt retractor comprising a spool from which the belt can be protracted for use and onto which the belt can be retracted by a rewind spring, an inertia-operated latch having a pawl means pivoted on the spool by a pivot means, being pivotable to latch the spool against rotation in the belt protraction direction in response to belt acceleration above a predetermined limit, and inhibitor means having a first position in which the pivoting of the pawl means to latch the spool is prevented and a second position in which such pivoting is permitted, characterised in that the latch mechanism has an inertia mass rotatable with the spool during spool rotation corresponding to belt acceleration below the predetermined limit and arranged to lag relative to the spool on spool rotation corresponding to belt acceleration above the predetermined limit, in that the pawl means includes guide means operative with the inertia mass to pivot the pawl means to latch the spool by means of the inertia mass on lagging, and in that the inhibitor means is operated by the pivot means and operates on the pawl means.

Because of its operative relationship with the latch mechanism, the inhibitor mechanism can be embodied in a suitable retractor in a very simple manner in the form for example of a flat disc of appropriate shape to co-operate with the latch mechanism parts.

The inhibitor mechanism can be arranged to inhibit latch mechanism operation when belt movement is in the retraction or rewind direction. Belt rewind can then be effected at high speed without risk of inadvertent checking of the belt movement by operation of the latch mechanism.

The invention is moreover of particular utility where the belt extends upwardly from the retractor to an adjustable shoulder anchorage, conveniently of the kind described in EP 0 086 633A. Where the belt guide is moved to its lowest position in an uncontrolled manner, which movement is of course aided by the retractor rewind spring, the inertia member tends to bounce and would thereby effect locking were it not for the inhibitor mechanism. A certain length of belt would have had to be fed back into the retractor to effect unlatching, but the retractor would have been latched against belt withdrawal, and the belt guide cannot be moved to make a length of belt available, as the guide is at its lowest position.

The invention is further described below, by way of example, with reference to the accompanying drawings, in which:

Figure 1 is a partial exploded perspective view of a vehicle seat belt retractor with belt sensitive latching and an inhibitor mechanism in accordance with the invention;

Figure 2 is an axial view on a larger scale of the retractor of Figure 1 with the inhibitor in a first, free, position; and

Figure 3 is a view resembling that of Figure 2 but showing the inhibitor mechanism in a second, inhibiting, position.

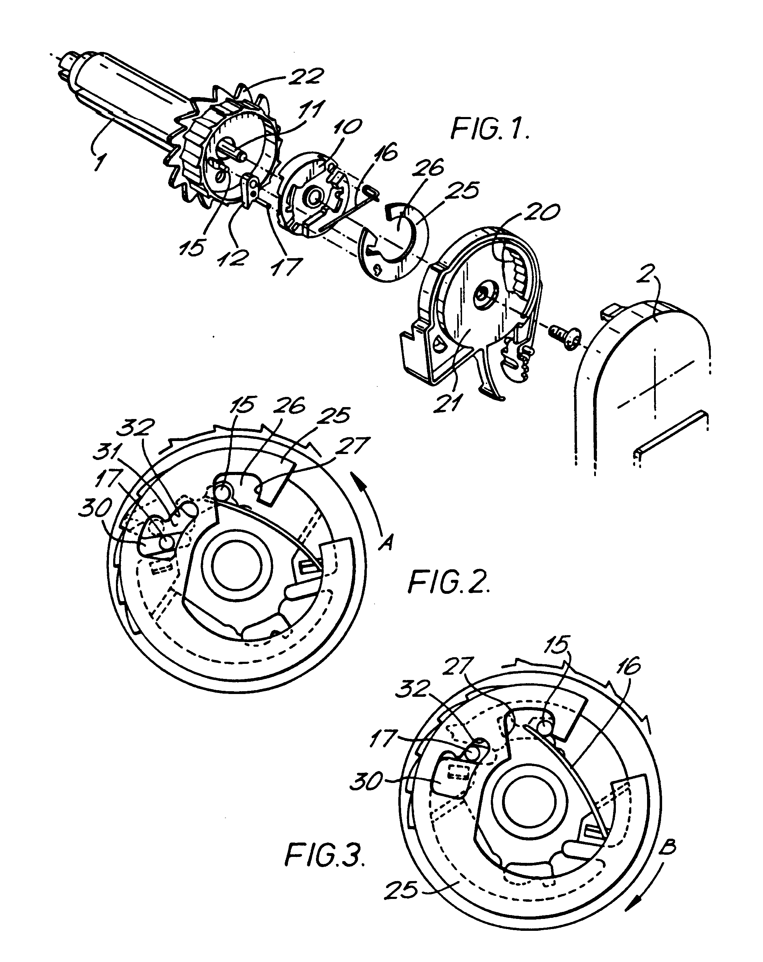

The retractor shown in Figure 1 incorporates a latch mechanism of the kind described in EP 0 097 407A, to which reference should be made for further particulars. For present purposes, it is noted that the retractor comprises a spool 1 journalled in a frame (not shown) provided with a cover of which a part 2 only is included in the Figure. One end of the seat belt is secured to the spool 1, which is biassed by a rewind spring (not shown) to wind or retreat the belt into the retractor. At one end of the spool 1, an inertia mass 10 is journalled on a stub shaft 11 projecting coaxially outwardly of the spool, and a pawl 12 is journalled on a pivot pin 15 which also projects from the spool in the axial direction, but at a position radially spaced from the stub shaft 11.

A spring wire 16 has one end secured on the inertia mass 10, and the other end engages the pin 15, so that the mass is driven by way of the spring wire to rotate with the spool, but is nevertheless capable of lagging with respect to it by flexure of the spring wire, when the spool rotation corresponds to a belt withdrawal acceleration exceeding a predetermined limit.

The pawl 12 is formed or provided with an axially projecting pawl pin 17 which is laterally spaced from the pin 15 and received in a slot in the inertia mass 10. The walls of the slot are shaped so that rotational lagging of the mass with respect to the spool 1 causes the pawl 12 to be pivoted radially outwardly on the pin 15, so that its free end can engage with internal teeth 20 provided on a lock cup 21. The lock cup 21 is normally stationary but is able to turn about the spool axis when coupled to the spool 1 to the pawl 12. Further spool rotation thus rotates the lock cup 21 and such rotation effects movement of a lockbar (not shown) so that the lockbar engages teeth of a ratchet wheel 22 carried by the spool 1 in such a way that spool rotation in the direction of belt unwinding, or protraction, is prevented.

In accordance with the present invention, an inhibitor mechanism comprises a thin, flat, shaped, disc 25 received within the lock cup 21, between the lock cup and the inertia mass 10. The disc 25 is guided by engagement of its outer periphery with the lock cup 21 for rotation about the spool axis, and is configured to provide angularly spaced radially extending drive abutments and a generally tangentially extending limiting abutment. As appears from Figures 2 and 3, these abutments are provided by two cut-outs, of which the larger cut-out 26 has the form of a recess extending inwardly from the disc periphery. The cut-out 26 has two spaced, generally radially extending, walls or edges 27 constituting the drive abutments, between which the pivot pin 15 projecting from the spool 1 is received. The inhibitor disc 25 is consequently driven by the pivot pin 15 to rotate with the spool but is capable of angular movement relative to the spool over a small range dictated by the angular spacing of the edges 27.

The smaller cut-out has a closed periphery as best shown in Figures 2 and 3 and comprises a radially wider portion 30 joined at a radially inward directed step to a radially narrower portion 31, of which the outer edge 32 constitutes a limiting abutment for the pawl pin 17, the free end of which extends through the slot in the inertia member 10 into the smaller cut-out.

As shown in Figure 2, rotation of the spool 1 in the direction corresponding to extraction of the belt, takes place in the direction of the arrow A. The pin 15 then drives the inhibitor disc 25 in the same direction, so that the pawl pin 17 is in the wider portion 30 of the smaller cut-out. The pawl 12 is consequently free to pivot radially outwardly sufficiently far for its end to engage the lock-cup teeth 20, so that latching of the retractor against belt protraction or withdrawal can take place.

As shown in Figure 3, the inhibitor disc 25 takes a different angular relationship with the spool 1 when this is rotating in the direction to retract the belt, as indicated by the arrow B. The disc 25 remains stationary until the pivot pin 15 engages the other radial wall 27 of the larger cut-out 26. As a result, the pawl pin 17 finds itself in the radially narrow portion 31 of the smaller cut-out, and radially outward pivoting of the pawl 12 is prevented by the limiting abutment or edge 32 of the smaller cut-out. Retractor latching consequently cannot then take place, and this condition prevails until reversal of the spool direction of rotation of the spool 1, when belt withdrawal recommences, brings about a return to the condition shown in Figure 2.

It will be appreciated that the inhibitor mechanism consists essentially only of the disc 25, which is configured simply as a flat circular disc with appropriate internal shaping, and which co-operates with the pivot pin 15 and pawl pin 17, both of which are present in any event, as necessary elements of the latch mechanism of the retractor.

Although reference has been made only to the belt-sensitive latching function of the retractor illustrated it will be evident from EP 0 092 407 A that the retractors can be dual-sensitive in that latching against belt withdrawal is effected also by acceleration (or deceleration) of the retractors, and thus of vehicles in which they are mounted, in excess of a predetermined limit.

## Claims

1. A vehicle seat belt retractor comprising a spool (1) from which the belt can be protracted for use and onto which the belt can be retracted by a rewind spring, an inertia-operated latch mechanism having a pawl means (12, 17) pivoted on the spool by a pivot means (15), being pivotable to latch the spool against rotation in the belt protraction direction in response to belt acceleration above a predetermined limit, and inhibitor means (25) having a first position in which the pivoting of the pawl means to latch the spool is prevented and a second position in which such pivoting is permitted, characterised in that the latch mechanism has an inertia mass (10) rotatable with the spool (1) during spool rotation corresponding to belt acceleration below the predetermined limit and arranged to lag relative to the spool on spool rotation corresponding to belt acceleration above the predetermined limit, in that the pawl means includes guide means (17) operative with the inertia mass to pivot the pawl means to latch the spool by means of the inertia mass on lagging, and in that the inhibitor means (25) is operated by the pivot means (15) and operates on the pawl means (17).

2. A retractor as claimed in claim 1 wherein the inhibitor means (25) is operated on so as to have its first position during belt retraction and its second position during belt protraction.

3. A retractor as claimed in claim 1 or 2 wherein the pivot comprises a pivot pin (15) on which the pawl is journalled, the pin (15) extending in a direction spaced from but parallel to the spool rotation axis.

4. A retractor as claimed in claim 3 wherein the inhibitor means (25) is rotatable about the spool rotational axis between its first and second positions, and has angularly spaced abutments (27) engageable by the pivot pin (15) so as to be driven by the pin to assume different angular positions relative to the spool (1) in the first and second positions.

5. A retractor as claimed in claim 1, 2, 3 or 4 wherein the means operative with the inertia mass comprises an operating member (17) extending from a pawl of the pawl means in a direction spaced from but parallel to the spool rotational axis into engagement with the inertia mass (10).

6. A retractor as claims in claim 5 wherein the operating member comprises a pawl pin (17).

7. A retractor as claimed in claim 5 or 6, wherein the inhibitor means (25) has an abutment (32) engageable with the operating member (17) in the first position of the inhibitor means only to prevent the latching pivotation of the pawl (12).

8. A retractor as claimed in any preceding claim wherein the inhibitor means comprises a flat disc (25) having recessed or cut-out portions (26, 30, 31) cooperable with the pivot means (15) and the pawl means (17).

9. A retractor as claimed in any preceding claim wherein the inertia mass (10) is located between the spool (1) and a lock-up (21) having teeth (20) engageable by the pawl (12), and the inhibitor means (25) is a thin disc received between the inertia mass and the lock cup.

## Revendications

1. Un rétracteur ou enrouleur de ceinture de sécurité de véhicule comprenant un tambour (1) à partir duquel la ceinture peut être déroulée en vue d'être utilisée et sur lequel la ceinture peut être enroulée par un ressort de réenroulement, un mécanisme de blocage fonctionnant par inertie comprenant des moyens d'encliquetage (12, 17) pivotés sur le tambour par des moyens de pivotement (15), pouvant être pivoté pour bloquer le tambour contre la rotation dans la direction de déroulement de la ceinture en réponse à une accélération de la ceinture au delà d'une limite prédéterminée, et des moyens d'arrêt ou d'inhibition (25) comprenant une première position dans laquelle le pivotement des moyens d'encliquetage pour bloquer le tambour est empêchée, et une seconde position dans laquelle ce pivotement est permis, caractérisé en ce que le mécanisme de blocage comprend une masse d'inertie (10) pouvant tourner avec le tambour (1) pendant la rotation du tambour correspondant à une accélération de la ceinture inférieure à la limite prédéterminée et agencée pour effectuer un ralentissement par rapport au tambour, lors d'une rotation du tambour correspondant à une accélération de la ceinture au delà de la limite prédéterminée, que les moyens d'encliquetage comprennent des moyens de guidage (17) fonctionnant avec la masse d'inertie pour faire pivoter les moyens d'encliquetage de manière à bloquer le tambour à l'aide de la masse d'inertie lors du ralentissement, et que les moyens d'arrêt (25) sont actionnés par les moyens de pivotement (15) et agissent sur les moyens d'encliquetage (17).

2. Un rétracteur ou enrouleur selon la revendication 1, dans lequel les moyens d'arrêt (25) sont actionnés de manière à venir dans leur première position pendant l'enroulement de la ceinture et dans leur seconde position pendant le déroulement de la ceinture.

3. Un rétracteur ou enrouleur selon la revendication 1 ou 2, dans lequel le pivot comprend un axe de pivotement (15) sur lequel tourillonne le cliquet, l'axe (15) se prolongeant dans une direction espacée, mais parallèle à l'axe de rotation du tambour.

4. Un rétracteur ou enrouleur selon la revendication 3, dans lequel les moyens d'arrêt (25) sont pivotables autour de l'axe de rotation du tambour, entre leur première et seconde positions et comportent des butées espacées angulairement (27) pouvant venir en engagement avec l'axe de pivotement (15) de manière à être entraînés par l'axe afin de prendre des positions angulaires différentes par rapport au tambour (1) dans les première et seconde positions.

5. Un rétracteur ou enrouleur selon la revendication 1, 2, 3 ou 4, dans lequel les moyens fonctionnant avec la masse d'inertie comprennent un organe d'actionnement (17) s'étendant' à partir d'un cliquet des moyens d'encliquetage, dans une direction espacée, mais parallèle à l'axe de rotation du tambour, en engagement avec la masse d'inertie (10).

6. Un rétracteur ou enrouleur selon la revendication 5, dans lequel l'organe d'actionnement comprend un axe d'encliquetage (17).

7. Un rétracteur ou enrouleur selon la revendication 5 ou 6, dans lequel les moyens d'arrêt (25) comprennent une butée (32) venant en engagement avec les moyens d'actionnement (17) uniquement dans la première position des moyens d'arrêt pour empêcher le pivotement de verrouillage du cliquet (12).

8. Un rétracteur ou enrouleur selon l'une quelconque des précédentes revendications, dans lequel les moyens d'arrêt comprennent un disque plat (25) muni de parties découpées ou en forme de cavité (26, 30, 31) pouvant coopérer avec les moyens de pivotement (15) et les moyens d'encliquetage (17).

9. Un rétracteur ou enrouleur selon l'une quelconque des précédentes revendications, dans lequel la masse d'inertie (10) est située entre le tambour (1) et une cuvette de blocage (21) munie de dents (20), pouvant venir en engagement avec le cliquet (12) et les moyens d'arrêt (25) sont un disque mince logé entre la masse d'inertie et la cuvette de blocage.

**Patentansprüche**

1. Rückzugsmechanismus für einen Fahrzeug-Sicherheitsgurt, umfassend eine Spule (1), von der der Gurt für den Gebrauch hervor- und auf die der Gurt mittels einer Aufrollfeder zurückgezogen werden kann, einen trägheitsbetätigten Verriegelungsmechanismus mit einer Sperrklinkenvorrichtung (12, 17), die mittels einer Drehzapfenvorrichtung (15) auf der Spule schwenkbar ist, um die Spule in Reaktion auf eine Gurtbeschleunigung oberhalb eines vorgegebenen Grenzwertes in dem der Gurtauszieh-Drehrichtung entgegengesetzten Sinn zu sperren, sowie eine Sperrvorrichtung (25) mit einer ersten Stellung, in der die Schwenkbewegung der Sperrklinkenvorrichtung zum Verriegeln der Spule verhindert wird, und einer zweiten Stellung, in der eine solche Schwenkbewegung möglich ist, dadurch gekennzeichnet, daß die Verriegelungsvorrichtung eine Trägheitsmasse (10) aufweist, die während der einer Gurtbeschleunigung unterhalb des vorgegebenen Wertes entsprechenden Spulenrotation mit der Spule (1) rotierbar und so angeordnet ist, daß sie bei der einer Gurtbeschleunigung oberhalb des vorgegebenen Wertes entsprechenden Spulenrotation relativ zu der Spule nacheilt, dadurch, daß die Sperrklinkenvorrichtung eine Führungseinrichtung (17) aufweist, welche mit der Trägheitsmasse zusammenwirkt, um die Sperrklinkenvorrichtung zu schwenken und die Spule mittels der Trägheitsmasse nach dem Nacheilen zu verriegeln, sowie dadurch, daß die Sperrvorrichtung (25) von der Drehzapfenvorrichtung (15) in Betrieb gesetzt wird und auf die Sperrklinkenvorrichtung (17) wirkt.

2. Rückzugsmechanismus gemäß Anspruch 1, bei dem derart auf die Sperrvorrichtung (25) eingewirkt wird, daß sie ihre erste Stellung beim Zurückziehen des Gurtes und ihre zweite Stellung beim Hervorziehen des Gurtes einnimmt.

3. Rückzugsmechanismus gemäß Anspruch 1 oder 2, bei dem der Drehpunkt einen Drehzapfen (15) aufweist, der als Achse für die Sperrklinke dient, wobei der Zapfen (15) in paralleler Richtung zu der Rotationsachse der Spule, jedoch mit einem Abstand dazu verläuft.

4. Rückzugsmechanismus gemäß Anspruch 3, bei dem die Sperrvorrichtung (25) zwischen der ersten und der zweiten Stellung um die Rotationsachse der Spule drehbar und mit schräg versetzten Stoßflächen (27) versehen ist, in die der Drehzapfen (15) eingreifen kann, um so von dem Zapfen angetrieben zu werden, daß verschiedene Winkelstellungen zur Spule (1) in der ersten und zweiten Stellung eingenommen werden können.

5. Rückzugsmechanismus gemäß den Ansprüchen 1, 2, 3 oder 4, bei dem die mit der Trägheitsmasse zusammenwirkende Vorrichtung ein Betätigungselement (17) aufweist, das von einer Sperrklinke der Sperrklinkenvorrichtung in einem Abstand parallel zu der Rotationsachse der Spule in Eingriff mit der Trägheitsmasse (10) verläuft.

6. Rückzugsmechanismus gemäß Anspruch 5, bei dem das Betätigungselement einen Klinkenzapfen (17) aufweist.

7. Rückzugsmechanismus gemäß den Ansprüchen 5 oder 6, bei dem die Sperrvorrichtung (25) eine Stoßfläche (32) aufweist, die nur in der ersten Stellung der Sperrvorrichtung in das Betätigungselement (17) eingreifen kann, um die Sperrschwenkung der Sperrklinke (12) zu verhindern.

8. Rückzugsmechanismus gemäß einem der vorhergehenden Ansprüche, bei dem die Sperrvorrichtung eine flache Scheibe (25) mit ausgesparten oder ausgeschnittenen Teilen (26, 30, 31) aufweist, die mit der Drehzapfenvorrichtung (15) und der Sperrklinkenvorrichtung (17) zusammenwirken können.

9. Rückzugsmechanismus gemäß einem der vorhergehenden Ansprüche, bei dem sich die Trägheitsmasse (10) zwischen der Spule (1) und einer Verriegelung (21) mit Zähnen (20) befindet, in die die Sperrklinke (12) eingreifen kann, und bei der die Sperrvorrichtung (25) eine dünne, zwischen der Trägheitsmasse und der Verriegelung aufgenommene Scheibe ist.

FIG.1.

FIG.2.

FIG.3.